# EUROPÄISCHE PATENTSCHRIFT

(11) **EP 1 739 122 B1**
(45) Veröffentlichungstag und Bekanntmachung des Hinweises auf die Patenterteilung: **26.03.2008**
(21) Anmeldenummer: 06012592.9
(22) Anmeldetag: 20.06.2006
(51) Int. Cl.: C08K 5/5317

(54) **Polymerzubereitungen enthaltend ein Metallsalz einer Phosphonsäure**
Polymer compositions containing salts of phosphonic acids
Compositions de polymère incombustibles contenant des sels d'acides phosphoniques

(30) Priorität: 30.06.2005 DE 102005030525
(43) Veröffentlichungstag der Anmeldung: 03.01.2007
(73) Patentinhaber: LANXESS Deutschland GmbH, 51369 Leverkusen (DE)
(72) Erfinder: Hansel, Jan-Gerd, Dr., 51069 Köln (DE); Endtner, Jochen, Dr., 50679 Köln (DE); Mauerer, Otto, D.I., 42799 Leichlingen (DE)

(56) Entgegenhaltungen:
- EP-A- 0 245 207
- EP-A- 0 430 876
- DE-A1- 2 252 210
- DE-A1- 4 221 581
- US-A- 4 444 930

## Beschreibung

Die vorliegende Erfindung betrifft flammgeschützte, nicht tropfende Polymerzubereitungen, dadurch gekennzeichnet, dass diese ein Antidripping-Mittel auf Basis mindestens eines Metallsalzes einer Phosphonsäure enthalten.

Technische Thermoplaste wie z.B. Polyester oder Polyamide werden in großem Umfang für Anwendungen im Automobilsektor, im Baubereich und vor allem im Elektro/Elektronik-Bereich verwendet. Häufig wird bei diesen Anwendungen gefordert, dass die eingesetzten Polymerzubereitungen flammwidrig sind. Die Flammwidrigkeit muss in standardisierten Prüfverfahren nachgewiesen werden, in denen nicht nur die Entzündbarkeit oder der Abbrand eines Prüfkörpers charakterisiert werden, sondern beispielsweise auch die Rauchentwicklung oder das Abtropfen der brennenden Polymerschmelze begutachtet wird. Insbesondere das brennende Abtropfen stellt ein großes Gefahrenpotential dar, weil es zur raschen Ausbreitung eines Brandes beitragen kann.

Diesem Umstand trägt das Prüfverfahren UL 94 der Underwriters' Laboratories Inc. Rechnung, das insbesondere im Elektro/Elektronik-Bereich weltweit als Referenzverfahren akzeptiert wird. Nach UL 94 wird eine Polymerzubereitung der Klasse V-0 zugeordnet, wenn ein daraus hergestellter länglicher Prüfkörper in einer vorgeschriebenen Anordnung nach zweimaliger Beflammung weniger als 10 s und im Durchschnitt von 10 Versuchen nicht mehr als 5 s nachbrennt und dabei nicht brennend abtropft. Die Klasse V-1 erlaubt maximal 30 s und im Durchschnitt nicht mehr als 25 s Nachbrennzeit ohne brennendes Abtropfen. Eine Polymerzubereitung, welche die Anforderungen der Klasse V-1 erfüllt, aber brennend abtropft, wird der Klasse V-2 zugeordnet. Werden auch die Anforderungen der Klasse V-2 nicht erreicht, so gilt der Test als nicht bestanden ("n.b."). Details hierzu sind zum Beispiel zu finden in J. Troitsch: "International Plastics Flammability Handbook", Hanser Publishers, München, Wien, New York, 2. Auflage 1990, S. 346 - 351.

Eine Polymerzubereitung, die brennend abtropft, ist für viele Anwendungen nicht geeignet, selbst wenn sie die Klasse V-2 erreicht. Durch Einsatz bekannter Flammschutzmittel lässt sich häufig die Entzündbarkeit verringern, das brennende Abtropfen jedoch nur unzureichend verhindern. Versucht man das Abtropfen durch den Einsatz größerer Mengen Flammschutzmittel zu unterbinden, so verschlechtern sich dadurch oft andere, technisch wichtige Eigenschaften, wie zum Beispiel die mechanischen oder elektrischen Eigenschaften des Werkstoffes, wie z. B. Kerbschlagzähigkeit oder Kriechstromfestigkeit. Insbesondere größere Mengen fester Flammschutzmittel erschweren auch häufig die Compoundierung zu homogenen Formmassen und die Verarbeitbarkeit solcher Formmassen infolge der durch die Feststoffe verursachten Erhöhung der Schmelzeviskosität.

Um dieses lang bekannte Problem zu lösen, können der Polymerzubereitung sogenannte Antidripping-Mittel zugefügt werden. Unter Antidripping-Mittel werden Stoffe verstanden, die in ihrer Art oder in ihrer eingesetzten Menge alleine keine ausreichende Flammschutzwirkung entfalten, jedoch das brennende Abtropfen wirksam verhindern, so dass in Zusammenwirkung mit Flammschutzmitteln die Klassen V-0 oder V-1 nach UL 94 erreicht werden können.

Am häufigsten werden in technischen Thermoplasten als Antidripping-Mittel Polytetrafluorethylen oder Tetrafluorethylencopolymerisate eingesetzt. Dies ist beispielsweise für Polyester in US 4,344,878 B1 oder für Polyamide in US 5,242,960 B1 beschrieben. Aus dem Stand der Technik ist bekannt, dass Polytetrafluorethylen oder Tetrafluorethylencopolymerisate in nicht gesinterter, fein verteilter, bevorzugt fibrilisierter Form eingesetzt werden müssen, wenn sie einen Antidripping-Effekt bewirken sollen. Dies macht ein aufwändiges Herstellverfahren notwendig, wie es beispielsweise in US 6,503,988 B1 beschrieben ist. Aus diesem Grunde sind Polytetrafluorethylen oder Tetrafluorethylencopolymerisate nicht für alle Anwendungen wirtschaftlich nutzbar.Alternativ wurden mineralische Antidripping-Mittel vorgeschlagen. Silikate (DE 24 08 531 A1), Kieselsäurederivate (DE 22 26 931 A1), Asbest (DE 23 46 056 A1, US 5,770,644), Chrysotil (DE 23 02 583 A1) und Xonotlit (EP 0 089 314 B1) wurden als Antidripping-Mittel in Polyesterzubereitungen beansprucht. Diese Zusätze haben verschiedene Nachteile. So sind sie erst bei höheren Konzentrationen ausreichend wirksam, was wegen der großen Mengen gleichzeitig eine Erniedrigung der Zähigkeitseigenschaften mit sich bringt. In einigen Fällen, zum Beispiel bei Kieselsäuren, ist die Dosierung und Verteilung im Polymer sehr schwierig. Bei Natriumsilikat beobachtet man eine unerwünschte Viskositätserniedrigung. Asbest und Chrysotil wurden inzwischen als krebserregend erkannt und werden aus Gründen der Arbeits- und Produktsicherheit nicht mehr eingesetzt.

Organisch modifizierte Tonmineralien verhindern das brennende Abtropfen in Polyesterzubereitungen (EP 0 132 228 B1, US 5,770,644 B1). Die Herstellung dieser Antidripping-Mittel ist jedoch aufwändig und erschwert ihre industrielle Nutzung.

Antidripping-Mittel auf Basis halogenfreier organischer Polymere wurden ebenfalls vorgeschlagen. Aromatische Polyamide in Faserform werden in US 4,439,578 B1 und EP 0 332 965 A1 als Antidripping-Mittel für technische Thermoplaste beansprucht. US 4,732,922 B1 beschreibt Polyesterzubereitungen, die durch Metallsalze sulfonierter EPDM-Elastomere nichttropfend ausgerüstet wurden. Antidripping-Mittel auf Basis organischer Polymere bringen den Nachteil mit sich, dass sie im Gegensatz zu den oben erwähnten fluorhaltigen Polymeren aufgrund ihrer eigenen Brennbarkeit selber die Brandlast der Polymerzubereitung erhöhen.

US 4,052,360 B1 offenbart halogenhaltige Copolyester, die als Antidripping-Mittel Polycarbodiimide enthalten. Die halogenhaltigen Flammschutzkomponenten und die Polycarbodiimide werden nach den Angaben von US 4,052,360 B1 in diesen Copolyesterzubereitungen chemisch in die Polyesterkette eingebaut. Eine solche Vorgehensweise ist bei der Verarbeitung von technischen Thermoplasten im Allgemeinen nicht erwünscht. Vielmehr werden bevorzugt Polymere und Additive durch physikalisches Mischen zu Polymerzubereitungen mit den gewünschten Eigenschaften verarbeitet.

Die Aufgabe dieser Erfindung ist daher die Bereitstellung von flammgeschützten Polymerzubereitungen, die kein brennendes Abtropfen zeigen, auch für halogenfreie Formmassen geeignet sind und die Nachteile, die durch die Verwendung der Antidripping-Mittel aus dem Stand der Technik entstehen, nicht aufweisen.

Polymerzubereitungen, die als Flammschutzmittel Metallsalze von organischen Phosphonsäuren oder organischen Phosphonsäurehalbestern enthalten, wurden in EP 0 245 207 B1 beschrieben. Demnach lassen sich mit diesen Metallphosphonaten Polyamid-Zubereitungen (EP 0 245 207 B1, Beispiel 29 - 31) und Polyester-Zubereitungen (EP 0 245 207 B1, Beispiel 32 - 34) herstellen, die beide der Klasse V-2 nach UL 94 angehören, also brennend abtropfen. Eine Wirkung der in EP 0 245 207 B1 beschriebenen Phosphonatsalze als Antidripping-Mittel ist aus dem Stand der Technik nicht bekannt.

Gegenstand dieser Erfindung sind Polymerzubereitunger nach Anspruch 1, dadurch gekennzeichnet, dass sie als Antidripping-Mittel mindestens ein Metallsalz einer Phosphonsäure der Formel (I) 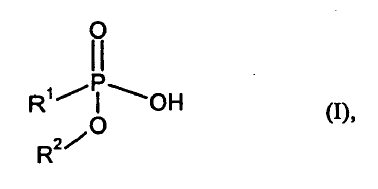 enthalten, worin R1 ein verzweigter oder unverzweigter Alkylrest mit 1 - 8 C-Atomen, bevorzugt ein unverzweigter Alkylrest mit 1 - 4 C-Atomen, und R2 ein Wasserstoff oder ein verzweigter oder unverzweigter Alkylrest mit 1 - 8 C-Atomen, bevorzugt ein unverzweigter Alkylrest mit 1 - 4 C-Atomen, bedeuten. Das Metall wird bevorzugt ausgewählt aus der Gruppe bestehend aus Li, Na, K, Mg, Ca, Sr, Ba, B, Al, Ga, Si, Ge, Sn, Sb, Ti, Fe, Mn und Zn, besonders bevorzugt Ca, Zn und Al.

Überraschend wurde gefunden, dass das brennende Abtropfen von Flammschutzmittel-haltigen Polymerzubereitungen durch die Einarbeitung dieser Metallphosphonate aus einem Metall und einer Phosphonsäure gemäß Formel (I) wirkungsvoll verhindert werden kann. Dabei können die Metallphosphonate überraschenderweise in derartig geringen Mengen eingesetzt werden, dass sie für sich genommen zur Erreichung der gewünschten Flammschutzwirkung nicht ausreichend sind. Durch die Verwendung von Metallphosphonaten als Antidripping-Mittel kann der Gehalt an Flammschutzmitteln oder an alternativen Antidripping-Mitteln in der Polymerzubereitung deutlich reduziert werden.

Die Polymerzubereitunger enthalen, bezogen auf die gesamte Polymerzubereitung,
A) 30 - 90 Gew.-% technische Thermoplaste, bevorzugt Polycarbonat, Polyamide und Polyester, bevorzugt Polyamide und Polyester, ganz besonders bevorzugt Polyester,
B) 3 - 35 Gew.-%, bevorzugt 4 - 30 Gew.-%, besonders bevorzugt 6 - 25 Gew.-% Flammschutzmittel, sowie
C) 0,01-10 Gew.%, bevorzugt 0,5 - 7 Gew.-% Metallphosphonate aus einem Metall und einer Phosphonsäure gemäß Formel (I) als Antidripping-Mittel.

Bevorzugt enthalten die Polymerzubereitungen technische Thermoplaste ausgewählt aus der Gruppe bestehend aus Polyamiden und Polyestern.

Polyamide im Sinne der Erfindung sind alle amorphen oder teilkristallinen, überwiegend aliphatisch/cycloaliphatischen, verzweigten oder unverzweigten thermoplastischen Polyamide, die nach dem bekannten Polykondensations- und/oder Polymerisationsprozess aus überwiegend aliphatischen/cycloaliphatischen Diaminen und Dicarbonsäuren und/oder Lactamen hergestellt werden. Ausgangsmaterialien sind aliphatische oder gemischt aliphatische aromatische Dicarbonsäuren wie Adipinsäure, 2,2,4- und 2,4,4-Trimethyladipinsäure Azelainsäure, Sebazinsäure, Decandicarbonsäure, Dodecandicarbonsäure, Cyclohexandicarbonsäure, Isophthalsäure und Terephthalsäure, sowie aliphatische und aromatische Diamine, wie Hexamethylendiamin, 2,2,4- und 2,4,4-Trimethylhexamethylendiamin, Diamino-dicyclohexylmethanisomere, Diamino-dicyclohexylpropanisomere und Isophorondiamin(isomere), Xylylendiamine, Aminocarbonsäuren wie ε-Aminocapronsäure und ω-Aminocarbonsäuren wie ω-Aminoundecansäure und ω-Aminolaurinsäure sowie Salze aus diesen Verbindungen.

Auch Copolyamide aus mehreren der genannten Monomere können eingesetzt werden.

Bevorzugt sind Polyamid-6, Polyamid-4,6, Polyamid-6,6, Polyamid-6,10, Polyamid-6,12, Polyamid-11, Polyamid-12, Polyamid-6T6, Polyamid-6,66, Polyamid-6,6I, Polyamid-6,6T.

Die Polyamide lassen sich nach bekannten Verfahren herstellen (siehe z. B. Kunststoff-Handbuch, Band VI, Seiten 11 bis 198, Carl-Hanser-Verlag, München, 1966).

Polyester im Sinne der Erfindung sind Reaktionsprodukte aus aromatischen Dicarbonsäuren oder ihren reaktionsfähigen Derivaten, wie Dimethylestern oder Anhydriden, und aliphatischen, cycloaliphatischen oder araliphatischen Diolen sowie Mischungen dieser Reaktionsprodukte.

Besonders bevorzugte Polyester enthalten mindestens 80 Mol-%, vorzugsweise mindestens 90 Mol-%, bezogen auf die Dicarbonsäurekomponente Terephthalsäure und mindestens 80 Mol-%, vorzugsweise mindestens 90 Mol-%, bezogen auf die Diolkomponente, Ethylenglykol-, 1,3-Propandiol und/oder 1,4-Butandiol-Reste.

Die bevorzugten Polyester können neben Terephthalsäureresten bis zu 20 Mol-%, vorzugsweise bis zu 10 Mol-%, Reste anderer aromatischer oder cycloaliphatischer Dicarbonsäuren mit 8 bis 14 C-Atomen oder Reste aliphatischer Dicarbonsäuren mit 4 bis 12 C-Atomen enthalten, wie z. B. Reste von Phthalsäure, Isophthalsäure, Naphthalin-2,6-dicarbonsäure, 4,4'-Diphenyldicarbonsäure, Bernsteinsäure, Adipinsäure, Sebacinsäure, Azelainsäure, Cyclohexandiessigsäure.

Die bevorzugten Polyester können neben Ethylenglykol- bzw. Butandiol-1,4-Resten bis zu 20 Mol-%, vorzugsweise bis zu 10 Mol-%, andere aliphatische Diole mit 3 bis 12 C-Atomen oder cycloaliphatische Diole mit 6 bis 21 C-Atomen-enthalten, z.B. Reste von 1,3-Propandiol, 2-Ethyl-1,3-propandiol, Neopentylglykol, 1,5-Pentandiol, 1,6-Hexandiol, 1,4-Cyclohexandimethanol, 3-Ethyl-2,4-pentandiol, 2-Methyl-2,4-pentandiol, 2,2,4-Trimethyl-1,3-pentandiol, 2-Ethyl-1,3-hexandiol, 2,2-Diethyl-1,3-propandiol, 2,5-Hexandiol, 1,4-Di-(2-hydroxyethoxy)-benzol, 2,2-Bis-(4-hydroxycyclohexyl)-propan, 2,4-Dihydroxy-1,1,3,3-tetramethylcyclobutan, 2,2-Bis-[4-(2-hydroxyethoxy)phenyl]-propan und 2,2-Bis-(4-hydroxypropoxyphenyl)-propan (DE-OS 24 07 674, DE-OS 24 07 776, DE-OS 27 15 932).

Die Polyester können durch Einbau relativ kleiner Mengen 3- oder 4-wertiger Alkohole oder 3-oder 4-basischer Carbonsäuren, z. B. gemäss DE-OS 19 00 270 und US 36 92 744, verzweigt werden. Beispiele bevorzugter Verzweigungsmittel sind Trimesinsäure, Trimellithsäure, Trimethylolethan und -propan und Pentaerythrit.

Besonders bevorzugt sind Polyester, die allein aus Terephthalsäure und deren reaktionsfähigen Derivaten (z. B. deren Dialkylestern) und Ethylenglykol, 1,3-Propandiol und/oder 1,4-Butandiol hergestellt worden sind, und Mischungen dieser Polyalkylenterephthalate. Bevorzugte Mischungen enthalten 1 bis 50 Gew.-%, vorzugsweise 1 bis 30 Gew.-%, Polyethylenterephthalat und 50 bis 99 Gew.-%, vorzugsweise 70 bis 99 Gew.-%, Polybutylenterephthalat. Solche Mischungen können außerdem noch andere Polymere, wie beispielsweise Polycarbonate, enthalten.

Die Polyalkylenterephthalate lassen sich nach bekannten Methoden herstellen (s. z. B. Kunststoff-Handbuch, Band VIII, S. 695 ff., Carl-Hanser-Verlag, München 1973).

Die erfindungsgemäßen Polymerzubereitungen sind mit bekannten Flammschutzmitteln (Komponente B) auf Basis von Bor-, Stickstoff-, Phosphor-, Chlor-, Brom-, Antimon-, Magnesium- oder Aluminium-haltigen Substanzen flammwidrig ausgerüstet. Diese sind zum Beispiel beschrieben in R. Gächter, H. Müller "Taschenbuch der Kunststoff-Additive", Hanser-Verlag, München, Wien, 3. Ausgabe 1990, S. 768 - 770, E. D. Weil, S. V. Levchik, J. Fire Sci. 2004, 22, 251 - 264 und E. D. Weil, S. V. Levchik, J. Fire Sci. 2004, 22, 339 - 350.

Als Flammschutzmittel der Komponente B) können handelsübliche organische Halogenverbindungen mit Synergisten oder handelsübliche organische Stickstoffverbindungen oder organisch/anorganische Phosphorverbindungen einzeln oder im Gemisch eingesetzt werden. Auch mineralische Flammschutzadditive wie Aluminiumtrihydrat, Magnesiumhydroxid oder Ca-Mg-Carbonat-Hydrate (z.B. DE-A 4 236 122 (= CA 2 109 024 A1)) können eingesetzt werden. Als halogenhaltige, insbesondere bromierte und chlorierte Verbindungen seien beispielhaft genannt: Ethylen-1,2-bistetrabromphthalimid, epoxidiertes Tetrabrombisphenol-A-Harz, Tetrabrombisphenol-A-oligocarbonat, Tetrachlorbisphenol-A-oligocarbonat, Pentabrompolyacrylat, bromiertes Polystyrol. Als Phosphorverbindungen sind die Phosphorverbindungen gemäß WO-A 98/17720 (= US 6 538 024) geeignet, z.B. Triphenylphosphat (TPP), Resorcinol-bis-(diphenylphosphat) (RDP) einschließlich Oligomere sowie Bisphenol-A-bis-diphenylphosphat (BDP) einschließlich Oligomere, ferner roter Phosphor, Phosphonsäureester, organische und anorganische Phosphinsäurederivate und deren Salze, insbesondere Metallphosphinate wie z.B. Calciumphosphinat oder Metalldialkylphosphinate wie z.B. Aluminiumtrisdiethylphosphinat, ferner Melaminphosphat, Melaminpyrophosphat, Ammoniumpolyphosphat, Melaminpolyphosphat und deren Mischungen. Als Stickstoffverbindungen kommen insbesondere Melamin und Melamincyanurat in Frage. Als Synergisten sind z.B. Antimonverbindungen, insbesondere Antimontrioxid und Antimonpentoxid, Zinkverbindungen wie z.B. Zinksulfid, Zinnverbindungen wie z.B. Zinnstannat und Borate wie z.B. Zinkborat geeignet. Auch können dem Flammschutzmittel sogenannte Kohlenstoffbildner und Tetrafluorethylenpolymerisate zugesetzt werden.

Die erfindungsgemäßen Polymerzubereitungen enthalten die Flammschutzmittel in einer Menge von 3 - 35 Gew.-%, bevorzugt 4 - 30 Gew.-%, besonders bevorzugt 6 - 25 Gew.-% bezogen auf die gesamte Polymerzubereitung. Dabei kann sowohl ein einzelnes wie auch eine Mischung von mehreren Flammschutzmitteln eingesetzt werden.

Die in den erfindungsgemäßen Polymerzubereitungen enthaltenen Antidripping-Mittel der Formel I (Komponente C) sind bekannt und lassen sich, wie beispielsweise in EP 0 245 207 B1 beschrieben, in einfachen Verfahren aus industriell verfügbaren Rohstoffen herstellen.

Bevorzugt werden als erfindungsgemäße Antidripping-Mittel Metallsalze der Methanphosphonsäure, des Methanphosphonsäuremonomethylesters, der Ethanphosphonsäure, des Ethanphosphonsäuremonoethylesters, der Propanphosphonsäure, des Propanphosphonsäuremonomethylesters, der 1-Methylpropanphosphonsäure, des 1-Methylpropanphosphonsäuremonomethylesters, der 2-Methylpropanphosphonsäure, des 2-Methylpropanphosphonsäuremonomethylesters, der n-Butanphosphonsäure oder des n-Butanphosphonsäuremonomethylesters eingesetzt.

Besonders bevorzugt werden als Antidripping-Mittel die Aluminiumsalze, Zinksalze und Calciumsalze der genannten Phosphonsäuren eingesetzt. Ganz besonders bevorzugt werden als Antidripping-Mittel Aluminium-*tris*(monomethylmethanphosphonat) und/oder Aluminium-*tris*(monomethylpropanphosphonat), Calciummethanphosphonat und/oder Calciumpropanphosphonat sowie Zinkmethanphosphonat und/oder Zinkpropanphosphonat eingesetzt, wobei Aluminium-tris(monomethylpropanphosphonat) ganz besonders bevorzugt ist.

Die erfindungsgemäßen Polymerzubereitungen enthalten die genannten Antidripping-Mittel in einer Menge von 0,01 - 15 Gew.-%, bevorzugt 0,1 - 10 Gew.-%, besonders bevorzugt 0,5 - 7 Gew.-% bezogen auf die gesamte Polymerzubereitung. Dabei kann sowohl ein einzelnes wie auch eine Mischung von mehreren Antidripping-Mitteln eingesetzt werden. Weiterhin kann eine Mischung von Metallphosphonaten aus Metallen und Phosphonsäuren gemäß Formel (I) und bekannten Antidripping-Mitteln, wie beispielsweise Polytetrafluorethylen, eingesetzt werden.

In einer bevorzugten Ausführungsform können die erfindungsgemäßen thermoplastischen Formmassen zusätzlich zu den Komponenten A), B und C) eine oder mehrere der Komponenten aus der Reihe D) oder E) enthalten.

In einer solchen bevorzugten Ausführungsform können also zusätzlich zu den Komponenten A), B) und C) noch
D) 0,001 - 70 Gew.-%, bevorzugt 5 - 60 Gew.-%, besonders bevorzugt 10 - 40 Gew.-% Füllstoffe und Verstärkungsstoffe in den thermoplastischen Formmassen enthalten sein.

Es kann aber auch eine Mischung aus zwei oder mehr unterschiedlichen Füllstoffen und/oder Verstärkungsstoffen beispielsweise auf Basis von Talk, Glimmer, Silikat, Quarz, Titandioxid, Wollastonit, Kaolin, amorphe Kieselsäuren, Magnesiumcarbonat, Kreide, Feldspat, Bariumsulfat, Glaskugeln und/oder faserförmige Füllstoffe und/oder Verstärkungsstoffen auf der Basis von Kohlenstofffasern und/oder Glasfasern enthalten sein. Bevorzugt werden mineralische teilchenförmige Füllstoffe auf der Basis von Talk, Glimmer, Silikat, Quarz, Titandioxid, Wollastonit, Kaolin, amorphe Kieselsäuren, Magnesiumcarbonat, Kreide, Feldspat, Bariumsulfat und/oder Glasfasern eingesetzt. Besonders bevorzugt werden erfindungsgemäß mineralische teilchenförmige Füllstoffe auf der Basis von Talk, Wollastonit, Kaolin und/oder Glasfasern eingesetzt.

Insbesondere für Anwendungen, in denen Isotropie bei der Dimensionsstabilität und eine hohe thermische Dimensionsstabilität gefordert werden, wie beispielsweise in Kfz-Anwendungen für Karosserieaußenteile, werden bevorzugt mineralische Füllstoffe eingesetzt, insbesondere Talk, Wollastonit oder Kaolin.

Besonders bevorzugt werden ferner auch nadelförmige mineralische Füllstoffe als Komponente D) eingesetzt. Unter nadelförmigen mineralischen Füllstoffen wird erfindungsgemäß ein mineralischer Füllstoff mit stark ausgeprägtem nadelförmigen Charakter verstanden. Als Beispiel seien nadelförmige Wollastonite genannt. Bevorzugt weist das Mineral ein Länge : Durchmesser - Verhältnis von 2:1 bis 35:1, besonders bevorzugt von 3:1 bis 19:1, am meisten bevorzugt von 4:1 bis 12:1 auf. Die mittlere Teilchengröße der erfindungsgemäßen nadelförmigen Mineralien liegt bevorzugt bei kleiner 20 µm, besonders bevorzugt bei kleiner 15 µm, insbesondere bevorzugt bei kleiner 10 µm bestimmt mit einem CILAS GRANULOMETER.

Der Füllstoff und/oder Verstärkungsstoff kann gegebenenfalls oberflächenmodifiziert sein, beispielsweise mit einem Haftvermittler bzw. Haftvermittlersystem z.B. auf Silanbasis. Die Vorbehandlung ist jedoch nicht unbedingt erforderlich. Insbesondere bei Verwendung von Glasfasern können zusätzlich zu Silanen auch Polymerdispersionen, Filmbildner, Verzweiger und/oder Glasfaserverarbeitungshilfsmittel verwendet werden.

Die erfindungsgemäß besonders bevorzugt einzusetzenden Glasfasern, die im allgemeinen einen Faserdurchmesser zwischen 7 und 18 µm, bevorzugt zwischen 9 und 15 µm haben, werden als Endlosfasern oder als geschnittene oder gemahlene Glasfasern zugesetzt. Die Fasern können mit einem geeigneten Schlichtesystem und einem Haftvermittler bzw. Haftvermittlersystem z.B. auf Silanbasis ausgerüstet sein.

Die teilchenförmigen Füllstoffe können bedingt durch die Verarbeitung zur Formmasse bzw. Formkörper in der Formmasse bzw. im Formkörper einen kleineren d97- bzw. d50-Wert aufweisen, als die ursprünglich eingesetzten Füllstoffe. Die Glasfasern können bedingt durch die Verarbeitung zur Formmasse bzw. Formkörper in der Formmasse bzw. im Formkörper kürzere Längenverteilungen als ursprünglich eingesetzt aufweisen.

Die erfindungsgemäßen Polymerzubereitungen können als Komponente E neben den genannten Polymeren, Füll- und Verstärkungsstoffen, Flammschutzmitteln, Antidrippingmitteln und Fließverbesserern auch weitere, in der Verarbeitung von technischen Thermoplasten übliche Additive enthalten.

In einer alternativen bevorzugten Ausführungsform können zusätzlich zu den Komponenten A), B) und C) und D) bzw. anstelle von D) noch
E) 0,001 - 15 Gew.-%, bevorzugt 0,01 - 7 Gew.-% weiterer Additive enthalten sein.

Übliche Additive im Sinne der vorliegenden Erfindung sind z.B. Stabilisatoren (zum Beispiel UV-Stabilisatoren, Thermostabilisatoren, Hydrolysestabilistoren, Gammastrahlenstabilisatoren), Biozide, Antistatika, Fließhilfsmittel, Entformungsmittel, weitere Brandschutzadditive, Emulgatoren, Nukleierungsmittel, Weichmacher, Gleitmittel, Säurefänger wie z.B. Hydrotalcit oder Magnesiumoxid, Farbstoffe und Pigmente. Die genannten und weitere geeignete Additive sind zum Beispiel beschrieben in Gächter, Müller, Kunststoff-Additive, 3. Ausgabe, Hanser-Verlag, München, Wien, 1989 und im Plastics Additives Handbook, 5th Edition, Hanser-Verlag, München, 2001. Die Additive können alleine oder in Mischung bzw. in Form von Masterbatchen eingesetzt werden.

Als Stabilisatoren können zum Beispiel sterisch gehinderte Phenole, Hydrochinone, aromatische sekundäre Amine wie Diphenylamine, substituierte Resorcine, Salicylate, Benzotriazole und Benzophenone, sowie verschieden substituierte Vertreter dieser Gruppen und deren Mischungen eingesetzt werden.

Als Verarbeitungshilfsmittel können zum Beispiel Copolymerisate aus mindestens einem α-Olefin mit mindestens einem Methacrylsäurester oder Acrylsäureester eines aliphatischen Alkohols beigefügt werden. Dies können inbesondere Copolymerisate sein, bei denen das α-Olefin aus Ethen und/oder Propen aufgebaut ist und der Methacrylsäurester oder Acrylsäureester als Alkoholkomponente lineare oder verzweigte Alkylgruppen mit 6 bis 20 C-Atomen enthält.

Als Pigmente können z.B. Titandioxid, Zinksulfid, Ultramarinblau, Eisenoxid, Ruß, Phthalocyanine, Chinacridone, Perylene, Nigrosin oder Anthrachinone eingesetzt werden.

Als Nukleierungsmittel können z.B. Natrium- oder Calciumphenylphosphinat, Aluminiumoxid, Siliziumdioxid sowie bevorzugt Talkum eingesetzt werden.

Als Gleit- und Entformungsmittel können z.B. Esterwachse, Pentaerytritoltetrastearat (PETS), langkettige Fettsäuren (z.B. Stearinsäure oder Behensäure) und Ester, deren Salze (z.B. Ca- oder Zn-Stearat) sowie Amidderivate (z.B. Ethylen-bis-stearylamid) oder Montanwachse (Mischungen aus geradkettigen, gesättigten Carbonsäuren mit Kettenlängen von 28 bis 32 C-Atomen) sowie niedermolekulare Polyethylen- bzw. Polypropylenwachse eingesetzt werden.

Als Weichmacher können zum Beispiel Phthalsäuredioctylester, Phthalsäuredibenzylester, Phthalsäurebutylbenzylester, Kohlenwasserstofföle oder N-(n-Butyl)benzolsulfonamid eingesetzt werden.Die erfindungsgemäßen Polymerzubereitungen werden hergestellt, indem die genannten Polymere, Flammschutzmittel, Antidripping-Mittel und gegebenenfalls Füll- und Verstärkungsstoffe, Fließhilfsmittel und weitere Additive bei Temperaturen von 150 bis 320 °C, vorzugsweise bei 200 - 290 °C, miteinander vermischt werden. Zur Herstellung können bekannte Methoden, wie beispielsweise Walzen, Kneten oder Extrudieren, verwendet werden. Diese Methoden sind beispielsweise beschrieben in Gert Burkhardt, Ulrich Hüsgen, Matthias Kalwa, Gerhard Pötsch, Claus Schwenzer: "Plastics, Processing", Ullmann's Encyclopedia of Industrial Chemistry Release 2005, Electronic Release, 7th ed., chap. 1 ("Processing of Thermoplastics"), Wiley-VCH, Weinheim 2005. Das Herstellverfahren kann ansatzweise oder kontinuierlich durchgeführt werden.

Aus den erfindungsgemäßen Polymerzubereitungen können durch bekannte Verarbeitungsverfahren wie Spritzguss oder Extrusion z. B. Formkörper, Halbzeuge, Fasern oder Filme hergestellt werden. Anwendungsbeispiele für Formkörper sind z. B. Stecker, Fassungen, Schalter, Spulenkörper, Gehäuse, Verkleidungen, Halterungen, Kabelkanäle oder Profile für die Elektro-, Elektronik-, Telekommunikations-, Kraftfahrzeug-, Computerindustrie, im Sport, in der Medizin im Haushalt oder in der Unterhaltungsindustrie.

Anhand der nachfolgenden Beispiele wird die Erfindung näher erläutert, ohne dass dadurch eine Einschränkung der Erfindung bewirkt werden soll.

### Beispiele

Die angegebenen Teile beziehen sich auf das Gewicht.

### Eingesetzte Materialien

**Komponente A1:** Lineares Polybutylenterephthalat (Pocan^{®} B 1300, Handelsprodukt der Lanxess Deutschland GmbH, Leverkusen, Deutschland) mit einer Intrinsischen Viskosität von ca. 0,93 cm³/g (gemessen in Phenol : 1,2-Dichlorbenzol = 1:1 bei 25°C)

**Komponente A2:** Lineares Polycarbonat Makrolon^{®} 2805, Handelsprodukt der Bayer Material-Science AG, Leverkusen, Deutschland)

**Komponente B1:** Antimontrioxid [CAS-Nr. 1309-64-4] 80 %iger Masterbatch in Polybutylenterephthalat

**Komponente B2:** Poly[oxycarbonyloxy(2,6-dibromo-1,4-phenylene)(1-methylethylidene)(3,5-dibromo-1,4-phenylene)] [CAS-Nr. 56262-45-4]

**Komponente B3:** Melamincyanurat [CAS-Nr. 37640-57-6]

**Komponente B4:** Calciumphosphinat [CAS-Nr.7789-79-9]

**Komponente B5:** PTFE [CAS-Nr. 9002-84-0]

**Komponente C1:** Aluminium-*tris*(monomethylpropanphosphonat) [CAS-Nr. 114076-21-0] hergestellt nach EP 0 245 207 B1, Beispiel 9, S. 7

**Komponente C2:** Calciumpropanphosphonat hergestellt nach folgender Vorschrift: Zu einer Suspension von 370 g Calciumhydroxid in 4,5 1 Wasser wurde eine Lösung von 657 g Propanphosphonsäure in 1,6 1 Wasser gegeben. Nach 3 h Rühren bei Raumtemperatur wurde der entstandene Feststoff isoliert und bis zur Gewichtskonstanz getrocknet. 733 g weißes Pulver, Schmelzpunkt > 250 °C.

| | | | | | | |
|---|---|---|---|---|---|---|
| Elementaranalyse für C₃H₇CaPO₃: | | | | | | |
| Berechnet: | C | 22,2 % | H | 4,3 % | P | 19,1 % |
| Gefunden: | C | 22,1 % | H | 4,3 % | P | 19,0 % |

**Komponente D:** Mit silanhaltigen Verbindungen beschlichtete Glasfaser mit einem Durchmesser von 10 µm (CS 7967, Handelprodukt der Lanxess Antwerpen N.V., Antwerpen, Belgien)

**Komponente E:** Als weitere Additive wurden die folgenden, für die Verwendung in thermoplastischen Polyestern gebräuchlichen Komponenten eingesetzt:

Nukleierungsmittel: Talkum [CAS-Nr. 14807-96-6] in Mengen von 0,01 bis 0,3 Gew.-%.

Pigmente: Titandioxid, Zinksulfid, Ruß, organische Farbstoffe jeweils in Mengen von 0 bis 3,3 Gew.-%.

UV-Stabilisator: Handelsübliches Benzotriazolderivat in Mengen von 0 bis 1 Gew.-%.

Thermostabilisator: Übliche Stabilisatoren auf Basis von Phenylphosphiten in Mengen von 0,01 bis 0,5 Gew.-%.

Entformungsmittel: Handelsübliche Fettsäureester in Mengen von 0,1 bis 1 Gew.-%.

Verarbeitungshilfsmittel: Handelsübliches Copolymerisat aus Ethen und Acrylsäureester, jeweils in Mengen von 0,5 bis 4,5 Gew.-%.

Die verwendeten weiteren Additive (Komponente E) stimmen in Art und Menge jeweils für entsprechende Vergleiche und Beispiele überein.

Die Zusammensetzungen der Beispiele und Vergleiche in Tabelle 1 wurden auf einem Zweiwellenextruder des Typs ZSK32 (Werner und Pfleiderer) bei Massetemperaturen von 260 bis 300 °C zu Formmassen compoundiert, die Schmelze wurde in ein Wasserbad ausgetragen und anschließend granuliert.

Die Prüfkörper für die in Tabellen 1 aufgeführten Untersuchungen wurden auf einer Spritzgießmaschine des Typs Arburg 320-210-500 bei einer Massetemperatur von ca. 260 °C und einer Werkzeugtemperatur von ca. 80 °C verspritzt:
- Normprüfkörper für die UL 94 V-Prüfung (0,75 mm)

Alle in den folgenden Tabellen aufgeführten Untersuchungen wurden an o.g. Prüfkörpern durchgeführt.

Brennbarkeit UL 94 V: nach UL 94

**Tabelle 1: Mengen der eingesetzten Materialien in den erfindungsgemäßen Beispielen 1 b s 3 und dem nicht erfindungsgemäßen Vergleichsbeispiel V1**

| **Beispiel** | **V1** | **1** | **2** | **3** |
|---|---|---|---|---|
| **A1** | 48,7 | 46,7 | 35 | 35 |
| **A2** | | | 15 | 15 |
| **B1** | 5 | 5 | | |
| **B2** | 11 | 10 | | |
| **B3** | | | 10 | 10 |
| **B4** | | | 5 | 10 |
| **B5** | 0,3 | 0,3 | | |
| **C1** | | | 10 | 5 |
| **C2** | | 3 | | |
| **D** | 30 | 30 | 25 | 25 |
| **E** | 5,0 | 5,0 | | |
| Klasse nach UL 94 (0,75 mm) | V-2 | V-0 | n.b. | V-0 |
| Nachbrennzeit pro Stab 1./2. Beflammung [Sekunden] | k.A. | k.A. | 18/23 | 3/2 |
| Brennendes Abtropfen | ja | nein | nein | nein |

### Ergebnisse:

Das Vergleichsbeispiel V1 zeigt, dass ohne erfindungsgemäßem Antidripping-Mittel auch bei Verwendung alternativer Antidripping-Mittel auf PTFE-Basis (B5) das brennende Abtropfen nicht verhindert werden kann. Demgegenüber tritt in Beispiel 1 bei Verwendung der erfindungsgemäßen Polymerzubereitungen auch dann kein brennendes Abtropfen mehr auf, wenn der Gehalt an Flammschutzmittel reduziert wurde.

In den Beispielen 2 und 3 ist ferner gezeigt, dass in den erfindungsgemäßen Polymerzubereitungen sich durch Erhöhung der Konzentration des Antidripping-Mittels zu Lasten eines Flammschutzmittels kein zusätzlicher Beitrag zum Flammschutz zeigt. Der Einsatz der Antidripping-Mittel verhindert zwar in beiden Beispielen wirksam das brennende Abtropfen, ergibt aber ohne ausreichende Flammschutzmittel-Menge (Beispiel 2) keinen wirksamen Flammschutz.

## Patentansprüche

1. Polymerzubereitungen, die bezogen auf die gesamte Polymerzubereitung
A) 30 - 90 Gew.% technische Thermoplaste,
B) 3 - 35 Gew.-% Flammschutzmittel,
C) 0,01-10 Gew.% Antidripping-Mittel
enthalten, **dadurch gekennzeichnet, dass** die technischen Thermoplaste mindestens ein Polyamid oder einen Polyester enthalten und dass das Antidripping-Mittel mindestens ein Aluminium-, Calcium- oder Zinksalz einer Phosphonsäure der Formel (I) ist 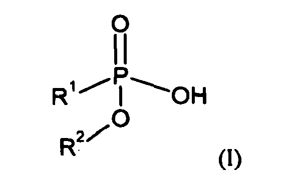 worin R¹ ein verzweigter oder unverzweigter Alkylrest mit 1 - 8 C-Atomen und R² ein Wasserstoff oder ein verzweigter oder unverzweigter Alkylrest mit 1 - 8 C-Atomen bedeuten.

2. Polymerzubereitungen gemäß Anspruch 1, **dadurch gekennzeichnet, dass** als Antidripping-Mittel ein Metallsalz der Methanphosphonsäure, des Methanphosphonsäuremonomethylesters, der Ethanphosphonsäure, des Ethanphosphonsäuremonoethylesters, der Propanphosphonsäure, des Propanphosphonsäuremonomethylesters, der 1-Methylpropanphosphonsäure, des 1-Methylpropanphosphonsäuremonomethylesters, der 2-Methylpropanphosphonsäure, des 2-Methylpropanphosphonsäuremonomethylesters, der n-Butanphosphonsäure oder des n-Butanphosphonsäuremonomethylesters enthalten ist.

3. Polymerzubereitungen gemäß Anspruch 1, **dadurch gekennzeichnet, dass** als Antidripping-Mittel Aluminium-tris(monomethylmethanphosphonat), Calciummethanphosphonat und/oder Zinkmethanphosphonat oder Aluminium-tris(monomethylpropanphosphonat), Calciumpropanphosphonat und/oder Zinkpropanphosphonat enthalten ist.

4. Polymerzubereitungen gemäß der Ansprüche 1 bis 3, **dadurch gekennzeichnet, dass** diese zusätzlich zu A), B) und C) eine oder mehrere Komponenten der Reihe
D) 0,001 - 70 Gew.-% Füllstoffe und/oder Verstärkungsstoffe und/oder
E) 0,001 - 15 Gew.-% weiterer Additive enthalten.

5. Verfahren zur Herstellung der Polymerzubereitungen gemäß der Ansprüche 1 bis 4, **dadurch gekennzeichnet, dass** man die Komponenten bei 150 bis 320°C vermischt.

6. Formteile, Halbzeuge, Fasern oder Filme erhältlich durch Spritzguss oder Extrusion der Formmassen gemäß der Ansprüche 1 bis 4.

7. Verwendung der Formteile oder Halbzeuge gemäß Anspruch 6 in der Elektro-, Elektronik-, Telekommunikation-, Kraftfahrzeug-, Computerindustrie, im Sport, in der Medizin im Haushalt oder in der Unterhaltungsindustrie.

8. Verwendung mindestens eines Aluminium-, Calcium- oder Zinksalzes einer Phosphonsäure der Formel (I) 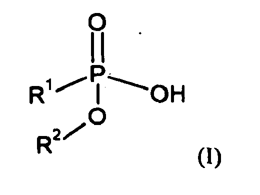 worin R¹ ein verzweigter oder unverzweigter Alkylrest mit 1 - 8 C-Atomen und R² ein Wasserstoff oder ein verzweigter oder unverzweigter Alkylrest mit 1 - 8 C-Atomen bedeuten als Antidripping-Mittel in technischen Thermoplasten.

9. Verwendung gemäß Anspruch 8, **dadurch gekennzeichnet, dass** als Antidripping-Mittel ein Metallsalz der Methanphosphonsäure, des Methanphosphonsäuremonomethylesters, der Ethanphosphonsäure, des Ethanphosphonsäuremonoethylesters, der Propanphosphonsäure, des Propanphosphonsäuremonomethylesters, der 1-Methylpropanphosphonsäure, des 1-Methylpropanphosphonsäuremonomethylesters, der 2-Methylpropanphosphonsäure, des 2-Methylpropanphosphonsäuremonomethylesters, der n-Butanphosphonsäure oder des n-Butanphosphonsäuremonomethylesters eingesetzt wird.

10. Verwendung gemäß Anspruch 8, **dadurch gekennzeichnet, dass** als Antidripping-Mittel Aluminium-tris(monomethylmethanphosphonat), Calciummethanphosphonat und/oder Zinkmethanphosphonat oder Aluminium-tris(monomethylpropanphosphonat), Calciumpropanphosphonat und/oder Zinkpropanphosphonat eingesetzt wird.

11. Verwendung gemäß der Ansprüche 8 bis 10, **dadurch gekennzeichnet, dass** die technischen Thermoplaste mindestens ein Polyamid oder einen Polyester enthalten.

12. Verwendung gemäß der Ansprüche 8 bis 11, **dadurch gekennzeichnet, dass** das Antidripping-Mittel Teil einer Polymerzubereitung ist, die bezogen auf die gesamte Polymerzubereitung
A) 30 - 90 Gew.-% technische Thermoplaste,
B) 3 - 35 Gew.-% Flammschutzmittel,
C) 0,01-10 Gew.-% Antidripping-Mittel enthält.

13. Verwendung gemäß Anspruch 12, **dadurch gekennzeichnet, dass** die Polymerzubereitung zusätzlich zu A), B) und C) eine oder mehrere Komponenten der Reihe
D) 0,001 - 70 Gew.-% Füllstoffe und/oder Verstärkungsstoffe und/oder
E) 0,001 - 15 Gew.-% weiterer Additive enthält.

## Claims

1. Polymer preparations which contain, based on the total polymer preparation,
A) 30-90% by weight of technical thermoplastics,
B) 3-35% by weight of flameproofing agents,
C) 0.01-10% by weight of antidripping agents,
**characterized in that** the technical thermoplastics contain at least one polyamide or one polyester and the antidripping agent is at least one aluminium, calcium or zinc salt of a phosphonic acid in the formula (I) 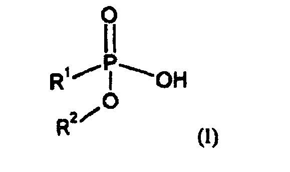 in which R¹ denotes a branched or straight-chain alkyl radical having 1-8 C atoms and R² denotes a hydrogen or a branched or straight-chain alkyl radical having 1-8 C atoms.

2. Polymer preparations according to Claim 1, **characterized in that** a metal salt of methanephosphonic acid, of monomethyl methanephosphonate, of ethanephosphonic acid, of monoethyl ethanephosphonate, of propanephosphonic acid, of monomethyl propanephosphonate, of 1-methylpropanephosphonic acid, of monomethyl 1-methylpropanephosphonate, of 2-methylpropanephosphonic acid, of monomethyl 2-methylpropanephosphonate, of n-butanephosphonic acid or of monomethyl n-butanephosphonate is present as the antidripping agent.

3. Polymer preparations according to Claim 1, **characterized in that** aluminium tris(monomethyl methanephosphonate), calcium methanephosphonate and/or zinc methanephosphonate or aluminium tris(monomethyl propanephosphonate), calcium propanephosphonate and /or zinc propanephosphonate is present as the antidripping agent.

4. Polymer preparations according to Claims 1 to 3, **characterized in that**, in addition to A), B) and C), they contain one or more components of the series
D) 0.001-70% by weight of fillers and/or reinforcing materials and/or
E) 0.001-15% by weight of further additives.

5. Process for the preparation of the polymer preparations according to Claims 1 to 4, **characterized in that** the components are mixed at 150 to 320°C.

6. Shaped articles, semifinished products, fibres or films obtainable by injection moulding or extrusion of the moulding materials according to Claims 1 to 4.

7. Use of the shaped articles or semifinished products according to Claim 6 in the electrical, electronics, telecommunication, motor vehicle or computer industry, in sport, in medicine, in the household or in the entertainment industry.

8. Use of at least one aluminium, calcium or zinc salt of a phosphonic acid of the formula (I) 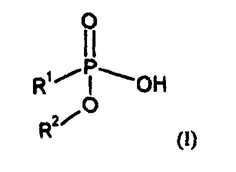 in which R¹ denotes a branched or straight-chain alkyl radical having 1-8 C atoms and R² denotes a hydrogen or a branched or straight-chain alkyl radical having 1-8 C atoms, as the antidripping agent in technical thermoplastics.

9. Use according to Claim 8, **characterized in that** a metal salt of methanephosphonic acid, of monomethyl methanephosphonate, of ethanephosphonic acid, of monoethyl ethanephosphonate, of propanephosphonic acid, of monomethyl propanephosphonate, of 1-methylpropanephosphonic acid, of monomethyl 1-methylpropanephosphonate, of 2-methylpropanephosphonic acid, of monomethyl 2-methylpropanephosphonate, of n-butanephosphonic acid or of monomethyl n-butanephosphonate is used as the antidripping agent.

10. Use according to Claim 8, **characterized in that** aluminium tris(monomethyl methanephosphonate), calcium methanephosphonate and/or zinc methanephosphonate or aluminium tris(monomethyl propanephosphonate), calcium propanephosphonate and/or zinc propanephosphonate is used as the antidripping agent.

11. Use according to Claims 8 to 10, **characterized in that** the technical thermoplastics contain at least one polyamide or one polyester.

12. Use according to Claims 8 to 11, **characterized in that** the antidripping agent is part of a polymer preparation which contains, based on the total polymer preparation,
A) 30-90% by weight of technical thermoplastics,
B) 3-35% by weight of flameproofing agents,
C) 0.01-10% by weight of antidripping agent.

13. Use according to Claim 12, **characterized in that**, in addition to A), B) and C), the polymer preparation contains one or more components of the series
D) 0.001-70% by weight of fillers and/or reinforcing materials and/or
E) 0.001-15% by weight of further additives.

## Revendications

1. Préparations polymères qui contiennent par rapport à la préparation polymère totale :
A) 30 à 90 % en poids de thermoplastiques techniques,
B) 3 à 35 % en poids d'un agent ignifuge,
C) 0,01 à 10 % en poids d'un agent anti-goutte,
**caractérisées en ce que** les thermoplastiques techniques contiennent au moins un polyamide ou un polyester, et **en ce que** l'agent anti-goutte est au moins un sel d'aluminium, de calcium ou de zinc d'un acide phosphonique de formule (I) : 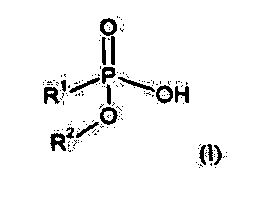 dans laquelle R¹ représente un radical alkyle ramifié ou non ramifié ayant 1 à 8 atomes de carbone et R² représente l'hydrogène ou un radical alkyle ramifié ou non ramifié ayant 1 à 8 atomes de carbone.

2. Préparations polymères selon la revendication 1, **caractérisées en ce qu'**elles contiennent, comme agent anti-goutte, un sel métallique de l'acide méthanephosphonique, du monométhylester de l'acide méthanephosphonique, de l'acide éthanephosphonique, du monoéthylester de l'acide éthanephosphonique, de l'acide propanephosphonique, du monométhylester de l'acide propanephosphonique, de l'acide 1-méthylpropanephosphonique, du monométhylester de l'acide 1-méthylpropanephosphonique, de l'acide 2-méthylpropanephosphonique, du monométhylester de l'acide 2-méthylpropanephosphonique, de l'acide n-butane-phosphonique ou du monométhylester de l'acide n-butanephosphonique.

3. Préparations polymères selon la revendication 1, **caractérisées en ce qu'**elles contiennent, comme agent anti-goutte, de l'aluminium-tris(monométhylméthanephosphonate), du méthanephosphonate de calcium et/ou du méthanephosphonate de zinc ou de l'aluminium-tris(monométhylpropanephosphonate), du propanephosphonate de calcium et/ou du propanephosphonate de zinc.

4. Préparations polymères selon les revendications 1 à 3, **caractérisées en ce que** celles-ci contiennent, en plus des composants A), B) et C), un ou plusieurs composants de la série suivante :
D) 0,001 à 70 % en poids de charges et/ou de matériaux de renforcement, et/ou
E) 0,001 à 15 % en poids d'autres additifs.

5. Procédé de fabrication des préparations polymères selon les revendications 1 à 4, **caractérisé en ce que** l'on mélange les composants à une température de 150 à 320 °C.

6. Pièces moulées, produits semi-finis, fibres ou films, qui peuvent être obtenus en moulant par injection ou par extrusion les masses de moulage selon les revendications 1 à 4.

7. Utilisation des pièces moulées ou des produits semi-finis selon la revendication 6, dans l'industrie électrique, l'industrie électronique, l'industrie des télécommunications, l'industrie automobile, l'industrie informatique, dans le domaine du sport, de la médecine, de l'habitat ou dans l'industrie du spectacle.

8. Utilisation d'au moins un sel d'aluminium, de calcium ou de zinc d'un acide phosphonique de formule (I) : 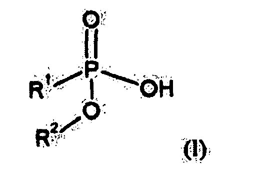 dans laquelle R¹ représente un radical alkyle ramifié ou non ramifié ayant 1 à 8 atomes de carbone et R² représente l'hydrogène ou un radical alkyle ramifié ou non ramifié ayant 1 à 8 atomes de carbone, comme agent anti-goutte dans des thermoplastiques techniques.

9. Utilisation selon la revendication 8, **caractérisée en ce que** l'on utilise, comme agent anti-goutte, un sel métallique de l'acide méthanephosphonique, du monométhylester de l'acide méthanephosphonique, de l'acide éthanephosphonique, du monoéthylester de l'acide éthanephosphonique, de l'acide propanephosphonique, du monométhylester de l'acide propanephosphonique, de l'acide 1-méthylpropanephosphonique, du monométhylester de l'acide 1-méthylpropanephosphonique, de l'acide 2-méthylpropanephosphonique, du monométhylester de l'acide 2-méthylpropanephosphonique, de l'acide n-butane-phosphonique ou du monométhylester de l'acide n-butanephosphonique.

10. Utilisation selon la revendication 8, **caractérisée en ce que** l'on utilise, comme agent anti-goutte, de l'aluminium-tris(monométhylméthanephosphonate), du méthanephosphonate de calcium et/ou du méthanephosphonate de zinc ou de l'aluminium-tris-(monométhylpropanephosphonate), du propanephosphonate de calcium et/ou du propanephosphonate de zinc.

11. Utilisation selon les revendications 8 à 10, **caractérisée en ce que** les thermoplastiques techniques contiennent au moins un polyamide ou un polyester.

12. Utilisation selon les revendications 8 à 11, **caractérisée en ce que** l'agent anti-goutte fait partie d'une préparation polymère qui contient, par rapport à la préparation polymère totale :
A) 30 à 90 % en poids de thermoplastiques techniques,
B) 3 à 35 % en poids d'un agent ignifuge,
C) 0,01 à 10 % en poids d'un agent anti-goutte.

13. Utilisation selon la revendication 12, **caractérisée en ce que** la préparation polymère contient, en plus des composants A), B) et C), un ou plusieurs composants de la série suivante :
D) 0,001 à 70 % en poids de charges et/ou de matériaux de renforcement, et/ou
E) 0,001 à 15 % en poids d'autres additifs.
